# NEUE EUROPÄISCHE PATENTSCHRIFT

(11) **EP 1 397 414 B2**
(45) Veröffentlichungstag und Bekanntmachung des Hinweises auf die Entscheidung über den Einspruch: **04.03.2020**
(45) Hinweis auf die Patenterteilung: 06.01.2010
(21) Anmeldenummer: 02748666.1
(22) Anmeldetag: 18.04.2002
(51) Int. Cl.: C08G 69/26, G02B 1/04, C08G 69/36

(54) **POLYAMIDFORMMASSEN ZUR HERSTELLUNG OPTISCHER LINSEN**
POLYAMIDE MOULDING COMPOUNDS FOR PRODUCING OPTICAL LENSES
MATIÈRES DE MOULAGE POLYAMIDES POUR LA FABRICATION DE LENTILLES OPTIQUES

(30) Priorität: 08.05.2001 DE 10122188
(43) Veröffentlichungstag der Anmeldung: 17.03.2004
(73) Patentinhaber: EMS-CHEMIE AG, 7013 Domat-Ems (CH)
(72) Erfinder: BÜHLER, Friedrich, Severin, CH-7430 Thusis (CH)
(74) Vertreter: Pfenning, Meinig & Partner mbB
(86) Internationale Anmeldenummer: PCT/EP2002/004314
(87) Internationale Veröffentlichungsnummer: WO 2002/090421

(56) Entgegenhaltungen:
- EP-A- 0 050 742
- EP-A- 0 837 087
- EP-A1- 0 345 810
- EP-A1- 0 411 791
- EP-A1- 0 556 646
- EP-A1- 0 581 495
- WO-A1-89/06664
- WO-A1-93/21276
- DE-A1- 1 813 018
- GB-A- 1 250 877
- GB-A- 2 170 209
- US-A- 5 591 495
- US-A- 5 917 001
- SHALABY, S.W. ET AL: "Copolyamides of Caprolactam and m-Xylylenediammonium Isophthalate", J. Appl. Polym. Sci, vol. 20, 1976, pages 3185-3198,
- DOLDEN J. G.: "STRUCTURE-PROPERTY RELATIONSHIPS IN AMORPHOUS POLYAMIDES.", POLYMER, ELSEVIER SCIENCE PUBLISHERS B.V., GB, vol. 17., 1 October 1976 (1976-10-01), pages 875-892., XP000197603, GB ISSN: 0032-3861, DOI: 10.1016/0032-3861(76)90254-8
- NIKIFOROV, V. ET AL: "Synthese von Polyxylylenphtalamiden durch Gas-Flüssigkeitskondensationspolymerisatio n", Khimiya Khimicheskaya Tekhnologiya, vol. 40, 1997, pages 96-97,
- GROH W., ZIMMERMANN A.: "WHAT IS THE LOWEST REFRACTIVE INDEX OF AN ORGANIC POLYMER?", MACROMOLECULES, American Chemical Society, WASHINGTON, DC, UNITED STATES, vol. 24., no. 25., 1 January 1991 (1991-01-01), pages 6660-6663., XP002061113, WASHINGTON, DC, UNITED STATES ISSN: 0024-9297, DOI: 10.1021/ma00025a016

## Beschreibung

Die vorliegende Erfindung betrifft neue thermoplastisch verarbeitbare, transparente Polyamidformmassen auf Basis von Copolyamiden gemäß Patentanspruch 1, die einen hohen Brechungsindex n_{D}²⁰ von größer 1,60 und eine niedrige Dichte von kleiner 1,3 g/cm³ zeigen. Gleichzeitig werden erfindungsgemäß eine niedere Doppelbrechung, hohe Härte und Kratzfestigkeit erzielt.

Die Herstellung der erfindungsgemäßen Polyamidformmassen erfolgt mittels üblicher Druckreaktoren (Autoklaven) nach einem modifizierten Verfahren. Die Umformung des aus den erfindungsgemäßen Formmassen hergestellten Granulats erfolgt über thermoplastische Prozesse wie Spritzgießen, insbesondere in Mehrkammer-Kavitäten-Werkzeugen.

Die Erfindung betrifft daher auch die Verwendung der erfindungsgemäßen Formmassen auf Basis von speziellen Copolyamiden zur Herstellung optischer Linsen. Für optische Linsen ist beispielsweise eine sehr niedrige Doppelbrechung erwünscht, um die Bildung von Farbringen oder Verzeichnungen zu vermeiden.

Der Begriff "transparente Polyamide", wie er in der vorliegenden Erfindung verwendet wird, bezeichnet (Co)Polyamid(e)(bzw. -formmassen), deren Transmissionsfaktor mindestens 70% beträgt, wenn das Polyamid in Form eines dünnes Plättchens von 2mm Dicke vorliegt.

Optische Linsenrohlinge werden heute überwiegend aus stark schrumpfenden Gießharzen hergestellt, die durch UV-aktivierbare Härter über mehrere Stunden in einer Form ausgehärtet werden. Der Härtungsprozess ist häufig mit Volumenschwund von 20% und mehr verbunden. Komplexe Geometrien können nicht mehr entformt werden. Ein Vorteil dieses Verfahrens besteht darin, dass die Gießharze mit Komponenten versetzt werden können, die hohe Brechungsindizes > 1,60 erreichen und hohe Härten und Wärmeformbeständigkeiten erzielen. Die hohe Härte schützt das Material gegen Beschädigung der Oberfläche. Der Hauptnachteil besteht in den Langen Härtungszeiten, die bis zu 40 Stunden betragen können und in den relativ komplizierten Rezeptur Zubereitungen, die in hochreine Formen gefüllt werden.

Für optische Linsen, die nach dem Spritzgieß-Verfahren geformt werden können, steigt die Geschwindigkeit für die Herstellung um ein Vielfaches an. Das "Handling" ist gegenüber den reaktiven Gießharzen stark vereinfacht. Es können sehr komplizierte Geometrien angefertigt werden. Mit der bekannten Technik des Hinterspritzens können Verbunde zu anderen Polyamiden hergestellt werden. Hauptsächlich werden heute für Linsen amorphe Kunststoffe wie PMMA (Polymethylmethacrylat) oder PC (Polycarbonat) verwendet. Ein Vorteil von PMMA ist die niedere Verarbeitungstemperatur, die hohe Lichtdurchlässigkeit und die hohe Härte. Die Nachteile liegen in der geringen Wärmeformbeständigkeit und dem niederen Brechungsindex n_{D}²⁰ von 1,49. Der Vorteil von PC ist die ausgezeichnete Zähigkeit und ein mittlerer Brechungsindex von 1,59. Nachteilig hingegen sind geringe Härte und geringe Chemikalienresistenz.

Weitere zur Herstellung von Linsen geeignete, amorphe Kunststoffe sind PS (Polystyrole) oder COC (Cycloolefin-Copolymere) mit hohen Wärmeformbeständigkeiten. Die Brechungsindizes zeigen ähnliche Werte wie Polycarbonat. Die Nachteile liegen für Polystyrol in der geringen Zähigkeit, geringen Wärmeformbeständigkeit und geringen chemischen Beständigkeit.

Zur Einstellung höherer Brechungsindizes und geringerer Dispersion können die genannten Formmassen mit entsprechenden Additiven versetzt werden, die eine hohe Elektronendichte und hohe Polarisierbarkeit besitzen. Im Allgemeinen können dazu schwere Atome wie Jod oder Metallsalze in geeigneten Verbindungen verwendet werden. Alternativ kann die Ausrüstung auch über Oberflächenlacke erfolgen, die Eigenschaften wie Brechungsindex, Dispersion, Transmission und Härte verbessern.

Üblicherweise werden heutzutage thermoplastische, teilkristalline und daher nicht transparente Polyamidformmassen, bestehend im Wesentlichen aus aliphatischen oder aromatischen Dicarbonsäuren und aus aliphatischen Diaminen in für die Polyamidherstellung üblichen Druckautoklaven hergestellt. Bei diesen Verfahren werden Temperaturen von 250 bis 350 °C und Drücke von 10 bis 20 bar angewendet. Am Ende der Reaktion entsteht eine Polymerschmelze, die über Düsen in Strangform ausgetragen, in einem Wasserbad gekühlt und anschließend zu Granulat geschnitten wird. Das Granulat wird anschließend in Extrudern wieder aufgeschmolzen und zu Extrusions- oder Spritzgießprodukten umgeformt.

Nach dem gleichen Verfahren werden auch transparente, thermoplastische Polyamidformmassen aus Monomeren hergestellt, wobei die Kristallitbildung durch Comonomere unterdrückt wird. Produkte mit hohem Aromatenanteil zeigen häufig hohe Glastemperaturen und hohe Viskositäten und können aufgrund geringer Fließfähigkeit nicht mehr aus den Autoklaven ausgetragen werden. Um die Fließfähigkeiten zu erhöhen werden aliphatische Comonomere eingebaut, die die Glastemperatur absenken.

Thermoplastische, transparente Polyamidformmassen für optische Anwendungen mit Brechungsindizes n_{D}²⁰ von größer 1,6, mit Dichten kleiner 1,3 g/cm³, hoher Härte und niedriger Glastemperatur, die im Autoklavenverfahren aus der Schmelze hergestellt werden und auf Spritzgießanlagen verarbeitet werden können, sind jedoch nicht bekannt.

US-A-4,843,141 beschreibt thermoplastische Polyesteramide, hergestellt gemäß bekannten Autoklavenprozessen, mit 2,2-substituierten Biphenylradikalen, die zur Herstellung von Folien und Fasern geeignet sind. Wesentliches Merkmal ist die Bildung anisotroper Schmelzen bis 350°C. In US-A-4,355,132 werden anisotrope Schmelzen bis 400 °C erhalten. In beiden Fällen stehen die flüssig-kristallinen Eigenschaften im Vordergrund.

US-A-4,446,305 beschreibt mögliche Bausteine für transparente Polyamide mit Brechungsindizes bis 2,0. Ziel ist die Herstellung von transparenten Produkten mit hoher Doppelbrechung. Die Herstellung erfolgt allerdings aus Lösung meist aus N-Methylpyrolidon ähnlich wie in US-A-4,384,107 und in US-A-4,520,189 bei niederen Temperaturen im Labormaßstab, wobei vorzugsweise aromatische, reaktive Säurechloride eingesetzt werden, die mit den Diaminen bereits bei Raumtemperatur reagieren. Dies hat den Nachteil, dass das Lösungsmittel entfernt werden muss und das Entfernen der HCl aufwendige Reinigungsschritte erfordert. Die speziellen Dicarbonsäuren oder Diamine, die zur Einstellung hoher Brechungsindizes notwendig sind, weisen normalerweise für eine Schmelzekondensation im Autoklavenprozesse bei 200 bis 300 °C zu geringe thermische Stabilitäten auf.

Verschiedene transparente Produkte auf Basis von Polyimid und Polyetherimid mit Tg > 235 °C sind aus US-A-4,216,321 bekannt und müssen bei niederen Temperaturen aus Lösungsmittel hergestellt und umgeformt werden, um eine thermische Schädigung oder Verfärbung zu vermeiden.

US-A-5,049,156 beschreibt transparente Polyamide mit Imidstrukturen für Linsen aufgebaut aus aromatischen Tetracarbonsäuren und aromatischen Diaminen, die in organischen Lösungsmitteln bei 80°C zu Aminosäuren umgesetzt werden. Beim Abdestillieren des Lösungsmittels unter Vakuum findet Ringschluss zum Imid statt. Entsprechende Formkörper oder Folien werden aus Lösung hergestellt und lassen sich in beheizten Pressen bei 200 bis 400°C umformen und aushärten. Es resultieren Brechungsindizes n_{D}²⁰ von 1,6 bis 1,7.

EP-A-556 646 beschreibt reaktive Epoxy-Gießharze mit Xylylenediamin-Komponenten, die zur Herstellung von optischen Gießlinsen mit Brechungsindex n_{D}²⁰ von 1,58 eingesetzt werden.

GB-A-1420741 beschreibt hydrodynamische Kontaktlinsen aus transparenten, thermoplastischen Polyamidformmassen mit trimetyl-hexamethylendiamin und Terephthalsäure, mit höherer Brechkraft als PMMA, jedoch mit Brechungsindex n_{D}²⁰ unter 1,59.

Die Patente JP 09012716 und JP 09012712 beschreiben transparente, thermoplastische Polyamide, hergestellt aus dimerisierten oder trimerisierten Fettsäuren oder Diaminen mit 11 bis 22 C-Atomen und Ethylendiamin nach dem Polykondensationsverfahren. Nach dem Spritzgießen werden transparente Linsen mit der Dichte 0,957, Lichttransmission von 91,2% und einem relativ niedrigen Brechungsindex n_{D}²⁰ von 1,496 erhalten.

EP-A-619 336 beschreibt transparente, thermoplastische Polyamidformmassen, hergestellt nach dem Polykondensationsverfahren aus Bis-(4-aminocyclohexyl)methan und bis zu 65% eines anderen Diamins, umgesetzt mit Dodecandicarbonsäure. Spritzgegossene, transparente Linsen zeigen tiefe Brechungsindizes n_{D}²⁰, d.h. um 1,51.

EP-A-837 087 beschreibt transparente, thermoplastische Polyamidformmassen, hergestellt nach dem Polykondensationsverfahren, aus cycloaliphatischen C₁₄-C₂₂ Diaminen mit aliphatischen C₈-C₁₄ Dicarbonsäuren oder aliphatischen C₈-C₁₄ Diaminen mit cycloaliphatischen C₇-C₃₆ Dicarbonsäuren, die bis zu 50% durch aromatische Dicarbonsäuren ersetzt sein können. Spritzgegossene, transparente Linsen zeigen Dichten um 1,01 g/cm³, Brechungsindizes n_{D}²⁰ von 1,51 und Abbe-Zahlen von 52.

JP-A-3050264 beschreibt Blends aus (A) transparenten, thermoplastischen Polyamidformmassen, hergestellt aus Hexamethylendiamin oder alicyclischen Diaminen wie Bis-(4-amino-3-methylcyclohexyl)methan oder Bis-(4-amino-3-methylcyclohexyl)propan und aromatischen Dicarbonsäuren wie Isophthalsäure oder Terephthalsäure und (B) aliphatischen Polyamiden wie PA46 (Polyamid 46), PA66, PA610, PA6, PA11. Die erreichbaren Brechungsindizes n_{D}²⁰ dieser Systeme liegen unter 1,59.

JP-A-3033157 beschreibt Blends aus (A) 90% transparenten, thermoplastischen Polyamidformmassen, hergestellt aus Hexamethylendiamin oder alicyclischen Diaminen wie Bis-(4-amino-3methylcyclohexyl)methan oder -propan und aromatischen Dicarbonsäuren wie Isophthalsäure oder Terephthalsäure und (B) 10% semiaromatischem Polyamid, aufgebaut aus aromatischen Dicarbonsäuren und aliphatischen Diaminen oder aliphatischen Dicarbonsäuren und aromatischen Diaminen. Die erreichbaren Brechungsindizes n_{D}²⁰ dieser Systeme liegen unter 1,60.

JP-A-62204201 beschreibt transparente, thermoplastische Polyamidformmassen, hergestellt aus Caprolactam, Hexamethylendiamin und 2,2,4-Trimethylhexamethylendiamin und Terephthalsäure (6/6T/3-6T), für optische Linsen mit dem Vorteil hoher Wärmeformbeständigkeit und Dimensionsstabilität. Der Brechungsindex n_{D}²⁰ liegt aber weit unterhalb von 1,6.

EP-A-345 810 beschreibt farblose, transparente Polyamide für Linsen, hergestellt aus 2,2-Bis (3,4-dicarboxyphenyl)hexafluoropropandianhydrid und aromatischen Diaminen in meta-Position oder 1,4 disubstituiertem Di-benzyl-methan oder-propan oder CF₃ oder SO₂ in meta-Position mit Brechungsindizes von > 1,6. Die Dichten dieser Linsen liegen mit 1,33 bis 1,44 g/cm³ relativ hoch. Der Nachteil liegt in der Herstellung in organischen Lösungsmitteln bei 80 °C, die eine aufwendige Trocknung erfordern. Die Linsen werden nach der Gießtechnik mit Lösungsmittel hergestellt. Ob das Material thermoplastisch in Spritzgussmaschinen verarbeitbar ist, wird nicht beschrieben.

Aufgabe der vorliegenden Erfindung ist es daher, thermoplastische, transparente Polyamidformmassen auf Basis von speziellen Copolyamiden zur Verfügung zu stellen, die im Vergleich zu PMMA, PC, PS und COC einen höheren Brechungsindex n_{D}²⁰ (>1,6) bei geringer Dichte aufweisen, die Verarbeitungstemperaturen von PC nicht übersteigen und gleichzeitig die höchste Härte und Steifigkeit zeigen.

Diese Aufgabe wird erfindungsgemäß durch die Formmassen gemäß Anspruch 1, das Verfahren gemäß Anspruch 11, die optischen Linsen gemäß den Ansprüchen 16 und 17 gelöst. Patentansprüche 18 und 19 nennen Verwendungszwecke. In den Unteransprüchen sind vorteilhafte Ausführungsformen der Erfindung enthalten.

Überraschenderweise wurde nun erfindungsgemäß festgestellt, dass transparente Polyamidformmassen auf Basis von Copolyamiden, enthaltend Diamine mit aromatischen Kernen, mit hohen Brechungsindizes n_{D}²⁰ von größer 1,6 und sehr niedrigen Dichten von kleiner 1,3 g/cm³, hoher Härte, geringer Doppelbrechung und geeigneter Schmelzeviskosität und Glastemperaturen von 120 bis 170 °C, aus bestimmten Kombinationen von Monomeren, wie sie in den Patentansprüchen 1 bis 10 angegeben sind, nach modifiziertem Verfahren im Druckautoklaven herstellbar sind. Ein besonderer Vorteil der erfindungsgemäßen Polyamidformmassen für thermoplastisches Linsenmaterial, besteht in der einfachen und rationellen Formgebung. Die Herstellungszeit für Linsen, nach dem für Polyamide üblichen Spritzgießverfahren beträgt Sekunden während die Aushärtungsprozesse für Linsen aus reaktiven Gießharzen mehrere Stunden erfordern.

Der Brechungsindex kann durch Änderung der Monomer-Zusammensetzung des Copolyamids in weiten Bereichen variiert werden. Damit können Materialien verschiedener Brechungsindizes nach der Verbund-Spritzgussmethode, schichtartig beliebig kombiniert werden. Durch zusätzliche Compoundierverfahren wie beispielsweise Extrusion können beliebige Ausrüstungen zur Stabilisierung, Einfärbung, Verstärkung etc. eingearbeitet werden.

Die Herstellung der erfindungsgemäßen Formmassen, d.h. die Kondensation, erfolgt auf üblichen Druckautoklaven, jedoch nach einem modifizierten Verfahren. Wesentlich ist hierbei, dass kein Prozessschritt den Druck von 4 bar im Kessel überschreitet. Die Umformung der erfindungsgemäßen Formmassen erfolgt dann über übliche thermoplastische Prozesse. Gegenüber bekannten Werkstoffen wie PMMA (Polymethylmethacrylat) oder PC (Polycarbonat) wurden optisch relevante Eigenschaften wie hoher Brechungsindex, Härte und hohe Wärmeformbeständigkeit in einem Produkt realisiert. Neben der günstigen Eigenschaftskombination für optische Anwendungen besitzen Formteile, hergestellt aus den erfindungsgemäßen Formmassen, die für Polyamide bekannte, hervorragende Chemikalienresistenz. Für optische Linsen ist beispielsweise eine sehr niedere Doppelbrechungen erwünscht, um die Bildung von Farbringen oder Verzeichnungen zu vermeiden.

Der besondere Vorteil der erfindungsgemäßen Formmassen besteht darin, dass aufgrund der ausgezeichneten Fließfähigkeit komplizierte optische Bauteile, beispielsweise im Spritzgießverfahren hergestellt werden können. Ferner sind nach diesem Verfahren verschiedene Verbundkombinationen aus chemisch verträglichen Materialien möglich, deren optische Eigenschaften variabel eingestellt werden können. Dies erlaubt beispielsweise die Konstruktion anspruchsvoller, technischer Teile aus widerstandsfähigen Polyamiden, wobei gleichzeitig eine widerstandsfähige optische Linse aus Polyamid in das Formteil integriert werden kann, unter Ausnutzung der Verbundhaftung von Polyamid zu Polyamid.

Ein weiterer Vorteil der erfindungsgemäßen Formmassen bietet der hohe Brechungsindex n_{D}²⁰ von größer 1,6, bei relativ niedrigen Dichten von kleiner 1,3 g/cm³. Das erlaubt die Herstellung von leichten, jedoch stark brechenden Linsen mit deutlichem Vorteil im Tragekomfort.

Ein weiterer Vorteil bietet die hohe Härte des Materials, die wesentliche Arbeitsschritte wie das Nachbearbeiten und Schleifen der Linsenrohlinge stark vereinfacht und dem Standard-Gießlinsenmaterial Alyldiglykolcarbonat CR39 ähnelt. Hohe Härten zeigen zusätzlich ausgezeichnete Resistenz der Oberflächen gegenüber mechanischer Beschädigung und können damit Oberflächen-Veredelungsschritte wie sogenannte Hardcoats oder andere Schutzlacke überflüssig machen.

Weitere wesentliche Vorteile der erfindungsgemäßen Polyamidformmassen, stellen die hohe Steifigkeit und Härte der Linsen dar, wodurch die Bearbeitungs- und Polierschritte wesentlich vereinfacht werden und mit Ausrüstungen durchgeführt werden können, welche für die Bearbeitung der Standardlinse CR-39 eingesetzt werden.

Erfindungsgemäß ist eine Copolyamid-Zusammensetzung mit einem Brechungsindex n_{D}²⁰ von größer 1,60 gemäß Formel (II):

MXDI/MXDT/6I/6T, (II)

mit folgenden Mol%-Anteilen der jeweiligen Komponenten:
50 bis 80 Mol% meta-Xylylendiamin (MXD),
50 bis 20 Mol% Hexamethylendiamin (6),
60 bis 80 Mol% Isophthalsäure (I) und
40 bis 20 Mol% Terephthalsäure (T), bezogen auf 100 Mol% Diamin und 100 Mol% Dicarbonsäuren.
Zur Beschleunigung der Reaktion während der Polykondensation der erfindungsgemäßen Copolyamiden können zum wässerigen Ansatz entsprechende phosphorhaltige Katalysatoren wie beispielsweise H₃PO₂, H₃PO₃, H₃PO₄ in Mengen von 0,01 bis 0,2 Gew.% zugegeben werden.

Zur Stabilisierung der Farbe im Zuge der Polymerisation und der späteren Verarbeitung können phosphorhaltige Stabilisatoren des Typs R₃PO₂, R₃PO₃, R₃PO₄ in Form der Säuren mit R=H oder Metallionen oder organischen linearen oder zyklischen Resten in Mengen von 0,01 bis 0,2 Gew.% oder solche, die sterisch gehinderte Phenole enthalten in Mengen von 0,01 bis 0,2 Gew.% eingesetzt werden.

Zur Regelung der Kettenlänge werden entweder monofunktionelle Amine oder monofunktionelle Säuren einpolymerisiert, oder es wird mit Überschuss an Diamin oder Dicarbonsäure gearbeitet. Als monofunktionelle Säuren werden erfindungsgemäß bevorzugt aliphatische, cycloaliphatische oder aromatische Säuren, insbesondere Säuren aus der Gruppe aus Benzoesäure, Essigsäure und Propionsäure eingesetzt. Als Amine werden erfindungsgemäß bevorzugt aliphatische oder cycloaliphatische Amine, insbesondere Hexylamin und/oder Cyclohexylamin eingesetzt. Besonders bevorzugt sind Reglertypen mit Stabilisatorfunktionen, wie beispielsweise mehrfach substituierte Piperidyl-Gruppen und tertiär-Butylphenyl-Gruppen.

Die erfindungsgemäßen Copolyamide weisen eine relative Viskosität im Bereich von 1,33 bis 1,65, gemessen in 0,5 % m=Kresol, auf.

Die erfindungsgemäßen Polyamid-Zusammensetzungen bzw. PolyamidFormmassen können weiterhin herkömmliche Additive, die dem Fachmann bekannt sind, enthalten. Insbesondere enthalten die erfindungsgemäßen Formmassen Additive wie UV-Absorber, die beispielsweise UV-Licht unter 400 nm ausfiltern oder Farben zum Tönen der Linsen oder thermotrope- oder thermochrome Additive, die temperaturabhängig oder abhängig von der Wellenlänge des eingestrahlten Lichtes den Farbton ändern oder isorefraktive gepfropfte Kern-Mantel-Polymere zur Schlagzähausrüstung oder Gleitmittel und weitere Verarbeitungshilfen oder isorefraktive Verstärkungsstoffe wie Glasfasern oder Kugeln oder Antibeschlagausrüstung.

Die erfindungsgemäßen Formmassen werden nach einem bekannten Kondensationsverfahren in Autoklaven hergestellt, dessen besonderes Merkmal darin besteht, dass kein Prozessschritt im Kessel den Druck von 10 bar, insbesondere 4 bar überschreitet. Bei höheren Drücken neigen diese Diamine mit aromatischem Kern zur Ausbildung von Verzweigungen, die die Schmelzeviskosität, beispielsweise bei 260 °C, drastisch erhöhen und damit das Austragen aus den Reaktoren unmöglich machen.

Geeignete Verfahren, zum Einarbeiten von gewünschten Additiven wie UV-Absorber, die beispielsweise UV-Licht unter 400 nm ausfiltern oder Farben zum Tönen der Linsen oder thermotrope- oder thermochrome Additive, die temperaturabhängig oder abhängig von der Wellenlänge des eingestrahlten Lichtes den Farbton ändern oder von isorefraktiven gepfropften Kern-Mantel-Polymeren zur Schlagzähausrüstung, sind die bekannten Compoundierverfahren im Extruder.

Zu den geeigneten Verfahren zur Umformung des aus den Formmassen hergestellten Granulates in optische Linsen bzw. Linsenrohlinge gehören alle für Thermoplaste bekannten Verfahren, insbesondere das Spritzgießen in Mehr-Kavitäten-Werkzeugen.

Ferner erlauben die erfindungsgemäßen Formmassen die Herstellung von Verbundlinsen aus hinterspritzten Folien oder anderen Formteilen, die Polarisationseigenschaften besitzen oder welche mit UV-Absorbern, die beispielsweise UV-Licht unter 400 nm ausfiltern oder mit Farben zum Tönen der Linsen oder mit thermotropen- oder thermochromen Additiven, die temperaturabhängig oder abhängig von der Wellenlänge des eingestrahlten Lichtes den Farbton ändern, ausgerüstet sind. Ferner können von Verbundlinsen, welche durch Hinterspritzen von Schutzfolien mit dem Linsematerial hergestellt werden, die Chemikalienresistenz oder die mechanische Beanspruchbarkeit, das Gleit- oder Abriebverhalten beeinflusst werden.

Geeignete Anwendungen für die erfindungsgemäßen, hochbrechenden Formmassen sind optische Linsen für Brillen, Kameras, Ferngläser, Mikroskope, elektrooptische Mess- und Prüfgeräte, optische Filter, Scheinwerferlinsen, Lampenlinsen, Projektoren und Beamer, Sichtfenster und Schaugläser.

Zur Veredelung der Oberflächen der hergestellten Formkörper können die bekannten Verfahren wie Lackieren mit Hardcoat, Softcoat oder UV-Schutzlack, Bedampfen mit Kohlenstoff oder mit Metallatomen, Plasma-Behandlung und Aufpolymerisieren von Schichten angewendet werden.

Diese erfindungsgemäßen Formmassen können selbstverständlich als Blendkomponenten in anderen amorphen oder teilkristallinen Polyamiden eingesetzt, und mit den üblichen Verstärkungsstoffen, Nanopartikeln, Schlagzähmodifikatoren, Farben, Flammschutzmitteln, Weichmachern, Stabilisatoren, Gleitmittel ausgerüstet werden.

Zur Illustrierung der Erfindung dienen die folgenden Beispiele 3 bis 8 im Vergleich zu den Beispielen 1, 2 und 9, welche die Herstellung und Eigenschaften der bereits bekannten Handelsprodukte Grilamid® TR 55 und Grivory® G21 behandeln.

### Vergleichsbeispiel 1 (VB 1)

In einen 130 L Druckautoklaven werden 13,4 kg Laurinlactam, 10,7 kg Isophthalsäure, 15,7 kg cycloaliphatisches Diamin (Laromin 260, BASF), 190 g Benzoesäure, in 40 kg Wasser suspendiert und während 2 Stunden auf 260 °C aufgeheizt, wobei der Druck auf ca. 20 bar durch Ablassen des Dampfes begrenzt wurde. In einer Druckphase wurde bei 290 °C und 20 bar ca. 2 Stunden weitergerührt und dann in einer Entspannungsphase der Druck langsam auf 1 bar gesenkt und ca. weitere 3 Stunden entgast. Nach Erreichen des gewünschten Drehmomentes des Rührers wird der Ansatz durch Bohrungen von ca. 5 mm entleert. Die entstehenden Polymerstränge werden durch ein Wasserbad geführt, gekühlt und zu Granulat geschnitten. Danach wird ca. 12 Stunden bei 90 °C in einem Taumeltrockner unter Stickstoff getrocknet. Es entsteht ein farbloses, glasklares Polyamid mit einem Glasumwandlungspunkt von 165 °C und einer relativen Viskosität von 1,55, gemessen in 0,5%iger m-Kresollösung. Die Eigenschaften des Polymers sind in Tabelle 1 zusammengestellt.

Die Herstellung von Formteilen aus dem getrockneten Granulat erfolgt auf einer Arburg-Spritzgießmaschine. Die eingestellte Massetemperatur liegt zwischen 270 und 290 °C, die Formtemperatur beträgt 60 bis 80 °C. Die Eigenschaften der Formteile sind in Tabelle 1 zusammengestellt.

### Vergleichsbeispiel 2 (VB 2)

In einen 130 L Druckautoklaven werden 14,4 kg Hexamethylendiamin, 13,6 kg Isophthalsäure, 6,8 kg Terephthalsäure, 125 g Essigsäure, in 40 kg Wasser suspendiert und während einer Druckphase 2 Stunden auf 280 °C aufgeheizt, wobei der Druck durch Ablassen des Dampfes auf maximal 20 bar begrenzt wurde. In der anschließenden Entspannungsphase wurde bei 280 °C weitergerührt und der Druck langsam auf 1 bar gesenkt und ca. weitere 3 Stunden entgast. Nach Erreichen des gewünschten Drehmomentes des Rührers wird der Ansatz durch Bohrungen von ca. 5 mm entleert. Die entstehenden Polymerstränge werden durch ein Wasserbad geführt, gekühlt und zu Granulat geschnitten. Danach wird ca. 12 Stunden bei 90 °C in einem Taumeltrockner unter Stickstoff getrocknet.

Es entsteht ein farbloses, glasklares Polyamid mit einem Glasumwandlungspunkt von 130 °C und einer relativen Viskosität von 1,45, gemessen in 0,5%iger m-Kresollösung Die Eigenschaften des Polymers sind in Tabelle 1 zusammengestellt.

Die Herstellung von Formteilen aus dem getrockneten Granulat erfolgt auf einer Arburg-Spritzgießmaschine. Die eingestellte Massetemperatur liegt zwischen 260 und 280 °C, die Formtemperatur beträgt 50 bis 80 °C. Die Eigenschaften der Formteile sind in Tabelle 1 zusammengestellt.

### Beispiele 3 und 8 (erfindungsgemäß)

In einen 130 L Druckautoklaven werden 6,44 kg Hexamethylendiamin, 8,75 kg m-Xylylendiamin, 13,13 kg Isophthalsäure, 6,56 kg Terephthalsäure, 125 g Essigsäure, in 40 kg Wasser suspendiert und während 2 Stunden auf 140 °C aufgeheizt, wobei sich ein Druck von ca. 3,5 bar einstellt. Im Gegensatz zur üblichen Fahrweise wird keine Druckphase gefahren und sofort entspannt. Es wurde auf 260 °C aufgeheizt unter gleichzeitigem Entspannen, so dass der Druck im Inneren des Kessels immer unter 4 bar liegt. Danach wird weitergerührt und der Druck langsam auf 1 bar gesenkt und ca. weitere 3 Stunden entgast. Nach Erreichen des gewünschten Drehmomentes des Rührers wird der Ansatz durch Bohrungen von ca. 5 mm entleert. Die entstehenden Polymerstränge werden durch ein Wasserbad geführt, gekühlt und zu Granulat geschnitten. Danach wird ca. 12 Stunden bei 100 °C in einem Taumeltrockner unter Stickstoff getrocknet. Es entsteht ein farbloses, glasklares Polyamid mit einem Glasumwandlungspunkt von 139 bis 141 °C und einer relativen Viskosität von 1,42 bis 1,45, gemessen in 0,5%iger m-Kresollösung. Die Eigenschaften des Polymers sind in Tabelle 1 zusammengestellt.

Die Herstellung von Formteilen aus dem getrockneten Granulat erfolgt auf einer Arburg-Spritzgießmaschine. Die eingestellte Massetemperatur liegt zwischen 250 und 275 °C, die Formtemperatur beträgt 30 bis 50 °C. Die Eigenschaften der Formteile sind in Tabelle 1 zusammengestellt.

### Beispiele 4, 5, 6 und 7 (erfindungsgemäß)

Die Herstellung des Polyamids erfolgt auch bei Bespielen 4, 5, 6 und 7 analog zu Beispiel 3 mit den in Tabelle 1 genannten zunehmenden Mengen an m-Xylylendiamin. Die Eigenschaften des Polymers sind in Tabelle 1 zusammengestellt.

Die Herstellung von Formteilen aus dem getrockneten Granulat erfolgt auf einer Arburg-Spritzgießmaschine. Die eingestellte Massetemperatur liegt zwischen 250 und 275 °C, die Formtemperatur beträgt 30 bis 50 °C. Die Eigenschaften der Formteile sind in Tabelle 1 zusammengestellt.

### Vergleichsbeispiel 9 (VB 9)

In einen 130 L Druckautoklaven werden 14,1 kg Hexamethylendiamin, 3,5 kg Naphthalindicarbonsäure 2,6, 17,2 kg Isophthalsäure, 230 g Essigsäure, in 40 kg Wasser suspendiert und während 2 Stunden auf 260 °C aufgeheizt, wobei der Druck durch Ablassen des Dampfes auf maximal 4 bar begrenzt wurde. Danach wurde bei 260 °C weitergerührt und der Druck langsam auf 1 bar gesenkt und ca. weitere 3 Stunden entgast. Nach Erreichen des gewünschten Drehmomentes des Rührers wird der Ansatz durch Bohrungen von ca. 5 mm entleert. Die entstehenden Polymerstränge werden durch ein Wasserbad geführt, gekühlt und zu Granulat geschnitten. Danach wird ca. 12 Stunden bei 90 °C in einem Taumeltrockner unter Stickstoff getrocknet. Es entsteht ein farbloses, glasklares Polyamid mit einem Glasumwandlungspunkt von 132 °C und einer relativen Viskosität von 1,48, gemessen in 0,5%iger m-Kresollösung. Die Eigenschaften des Polymers sind in Tabelle 1 zusammengestellt.

Die Herstellung von Formteilen aus dem getrockneten Granulat erfolgt auf einer Arburg-Spritzgießmaschine. Die eingestellte Massetemperatur liegt zwischen 250 und 275 °C, die Formtemperatur beträgt 30 bis 50 °C. Die Eigenschaften der Formteile sind in Tabelle 1 zusammengestellt.

**Tabelle 1: Werte trocken**

| Beispiele | VB 1 | VB2 | B3 | B4 | B5 | B6 | B7 | B8 | VB9 |
|---|---|---|---|---|---|---|---|---|---|
| | | | | | | | | | |
| | TR55* | G21* | | | | | | | |
| MXD (Gew.%) | | | 10,0 | 15,0 | 20,0 | 25,5 | 30,0 | 10,0 | |
| HMD(Gew.%) | | 41,1 | 32,4 | 27,4 | 23,1 | 18,4 | 13,9 | 32,4 | 40,6 |
| IPS (Gew.%) | | 38,7 | 38,4 | 38,0 | 38,0 | 37,3 | 37,4 | 38,4 | 49,4 |
| TPS (Gew.%) | | 19,3 | 19,2 | 19,6 | 18,9 | 18,8 | 18,7 | 19,2 | |
| 2,6-NDC (Gew.%) | | | | | | | | | 10,0 |
| | | | | | | | | | |
| | | | | | | | | | |
| Werte trocken | | | | | | | | | |
| Tg (°C)/DSC | 165 | 130 | 139 | 144 | 147 | 153 | 162 | 141 | 132 |
| SchmelzTem (°C) | - | - | - | - | - | - | - | - | - |
| Dichte (g/cm3) | 1,06 | 1,191 | 1,194 | 1,197 | 1,213 | 1,223 | 1,230 | 1,206 | 1,191 |
| MVI 275°C/5kg (cm³/10Min.) | 20 | 40 | 48 | 48 | 45 | 51 | 32 | 24 | 22 |
| r.V.0,5%m-Kr | 1,55 | 1,45 | 1,42 | 1,39 | 1,39 | 1,35 | 1,36 | 1,45 | 1,48 |
| E-Modul (MPa) | 2300 | 2900 | 3200 | 3400 | 3500 | 3700 | 4000 | 3100 | 2800 |
| KSZ kJ/m2 | 7 | 6 | 2,8 | 1,3 | 1,0 | 0,9 | 1,5 | 5,6 | 6,6 |
| | | | | | | | | | |
| Lichttransm. 3mm/540nm (%) | 90 | 80 | 82 | 80 | 75 | 83 | 80 | 81 | 75 |
| Brechungsindex n_{D}²⁰ | 1,537 | 1,589 | 1,604 | 1,609 | 1,613 | 1,621 | 1,627 | 1,603 | 1,601 |

Die Eigenschaften mit der Kennzeichnung "cond" wurden an konditionierten Prüfkörpern gemessen. Die Konditionierung wurde nach ISO 1110 durchgeführt. Alle übrigen Eigenschaften wurden an trockenen Prüfkörpern bestimmt.

Die Messung der thermischen Daten erfolgte am Granulat (getrocknet: 120 °C/24 h) durchgeführt, in einem Perkin Elmer DSC-Gerät mit Aufheizgeschwindigkeiten von 20 °C/Min und Abkühlgeschwindigkeiten von 5 °C/Min.

Die Schmelztemperatur wurde gemäß ISO 3146-C gemessen. Kristallisationstemperatur, Kristallisationsenthalpie und Kristallisationsgeschwindigkeit wurden im ersten Abkühlzyklus (5°C/Min) bestimmt. Zur Bestimmung der Glasumwandlungstemperatur Tg wird die Probe auf Tg+20 °C aufgeheizt und abgeschreckt anschließend wird im zweiten Aufheizzyklus (20 °C/Min) gemessen.

Die Dichte wurde bei 20 °C im Pycnometer an Ausschnitten von Formteilen bestimmt.

Der MVI wurde auf einem Göttfert-Automaten nach DIN 53735/ISO 1133 bestimmt. Die Aufheizzeit beträgt 4Minuten auf 275 °C. Die Messung erfolgt unter einem Auflagegewicht von 5 kg.

Die mechanischen Eigenschaften E-Modul, Reißfestigkeit, und Reißdehnung wurden durch Zugprüfung an Norm-Prüfkörpern gemäß ISO 527 bestimmt.

Die Messung der Schlagzähigkeit (SZ) und Kerbschlagzähigkeit (KSZ) wurde nach Charpy bei 23 °C gemäß ISO 179eU und ISO 179eA durchgeführt.

Die Lichttransmission wurde mit einem Perkin Elmer UV Gerät im Bereich 200 bis 800 nm an Farbplättchen 50x30x3 mm gemessen. Der Transmissionswert wird für die Wellenlänge 540 nm (3 mm) angegeben.

Der Brechungsindex wurde an Farbplättchen 50x30x3 mm auf einem Abbe Refraktometer mit Tageslicht bestimmt. Die Brechungsindexes verstehen sich als n_{D}²⁰-Werte.

Die Härte Shore D wurde nach ISO 868 bei Raumtemperatur an konditionierten Proben bestimmt.

## Patentansprüche

1. Transparente, thermoplastische Polyamidformmassen mit einem Brechungsindex n_{D}²⁰ von größer 1, 6,
**dadurch gekennzeichnet, dass** die Copolyamide die Zusammensetzung gemäß Formel (II) aufweisen:
MXDI/MXDT/6I/6T, (II)
mit folgenden Mol%-Anteilen der jeweiligen Komponenten:
50 bis 80 Mol% meta-Xylylendiamin (MXD),
50 bis 20 Mol% Hexamethylendiamin (6),
60 bis 80 Mol% Isophthalsäure (I) und
40 bis 20 Mol% Terephthalsäure (T), bezogen auf
100 Mol% Diamin und 100 Mol% Dicarbonsäuren.

2. Polyamidformmassen gemäß Anspruch 1, **dadurch gekennzeichnet, dass** zur Beschleunigung der Reaktion während der Polykondensation zum wässrigen Ansatz phosphorhaltige Katalysatoren in Mengen von 0,01 bis 0,2 Gew.% zugegeben werden.

3. Polyamidformmasse gemäß Anspruch 2, **dadurch gekennzeichnet, dass** es sich bei den phosphorhaltigen Katalysatoren um H₃PO₂, H₃PO₃ oder H₃PO₄ handelt.

4. Polyamidformmasse gemäß einem der Ansprüche 1 bis 3, **dadurch gekennzeichnet, dass** zur Stabilisierung der Farbe im Zuge der Polymerisation und der späteren Verarbeitung phosphorhaltige Stabilisatoren des Typs R₃PO₂, R₃PO₃, R₃PO₄ mit R = H oder Metallionen oder organischen linearen oder zyklischen Resten oder sterisch gehinderten Phenolen in Mengen von 0,01 bis 0,2 Gew.%, eingesetzt werden.

5. Polyamidformmassen gemäß einem der Ansprüche 1 bis 4, **dadurch gekennzeichnet, dass** zur Regelung der Kettenlänge entweder monofunktionelle Amine oder monofunktionelle Säuren einpolymerisiert werden, oder ein Überschuss an Diamin oder Dicarbonsäure eingesetzt wird.

6. Polyamidformmassen gemäß Anspruch 5, **dadurch gekennzeichnet, dass** die einpolymerisierten monofunktionellen Amine oder monofunktionellen Säuren, oder der Überschuss an Diamin oder Dicarbonsäure als Reglertypen mit Stabilisatorfunktionen mehrfach substituierte Piperidyl-Gruppen oder tertiär-Butyl-phenyl-Gruppen umfassen.

7. Polyamidformmassen gemäß Anspruch 6, **dadurch gekennzeichnet, dass** als monofunktionelle Amine aliphatische oder cycloaliphatische Amine und als monofunktionelle Säuren aliphatische, cycloaliphatische oder aromatische Säuren verwendet werden.

8. Polyamidformmassen gemäß Anspruch 7, **dadurch gekennzeichnet, dass** als monofunktionelle Amine Hexylamin und/oder Cyclohexylamin verwendet werden.

9. Polyamidformmassen gemäß Anspruch 7, **dadurch gekennzeichnet, dass** als monofunktionelle Säuren Säuren aus der Gruppe aus Benzoesäure, Essigsäure und Propionsäure verwendet werden.

10. Polyamidformmassen gemäß einem der vorhergehenden Ansprüche 1 bis 9, **dadurch gekennzeichnet, dass** die Copolyamide eine relative Viskosität (r.V.)von 1,33 bis 1,65, gemessen 0,5 Gew.% in m-Kresol, aufweisen.

11. Verfahren zur Herstellung von Formkörpern aus den Formmassen gemäß einem oder mehreren der Ansprüche 1 bis 10, **dadurch gekennzeichnet, dass** zur Umformung des aus den Formmassen hergestellten Granulates in optische Linsen oder Linsenrohlinge die für Thermoplasten bekannten Verfahren angewendet werden.

12. Verfahren zur Herstellung von Formkörpern aus den Formmassen gemäß Anspruch 11, **dadurch gekennzeichnet, dass** das Verfahren des Spritzgießens angewendet wird.

13. Verfahren zur Herstellung von Formkörpern aus den Formmassen gemäß Anspruch 12, **dadurch gekennzeichnet, dass** das Verfahren des Spritzgießens in Mehr-Kavitäten-Werkzeuge angewendet wird.

14. Verfahren zur Weiterverarbeitung der Polyamidformmassen gemäß einem der Ansprüche 11 bis 13, **dadurch gekennzeichnet, dass** Folien oder andere Formteile mit Polarisationseigenschaften oder mit UV-Absorbern, die UV-Licht unter 400 nm ausfiltern, oder mit Farben zum Tönen der Linsen oder mit Zusätzen, die durch Temperatureinwirkung ihr Aussehen verändern oder mit thermochromen Additiven, die temperaturabhängig oder abhängig von der Wellenlänge des eingestrahlten Lichtes den Farbton ändern, hinterspritzt werden.

15. Verfahren zur Weiterverarbeitung der aus den Formmassen hergestellten Formkörpern gemäß einem der Ansprüche 11 bis 14, das das Lackieren der Oberflächen mit Hardcoat, Softcoat oder UV-Schutzlack, Bedampfen mit Kohlenstoff oder mit Metallatomen, Plasma-Behandlung und Aufpolymerisieren von Schichten umfasst.

16. Optische Linsen für Brillen, **dadurch gekennzeichnet, dass** sie aus den erfindungsgemäßen Formmassen gemäß einem der Ansprüche 1 bis 10 sowie dem Verfahren gemäß einem der Ansprüche 11 bis 14 hergestellt worden sind.

17. Optische Linsen für Kameras, Ferngläser, Mikroskope, elektrooptische Mess- und Prüfgeräte, optische Filter, Scheinwerferlinsen, Lampenlinsen, Projektoren und Beamer, Sichtfenster und Schaugläser, **dadurch gekennzeichnet, dass** sie aus den erfindungsgemäßen Formmassen gemäß einem der Ansprüche 1 bis 10, sowie dem Verfahren gemäß einem der Ansprüche 11 bis 14 hergestellt worden sind.

18. Verwendung der erfindungsgemäßen Formmassen gemäß einem der Ansprüche 1 bis 10 zur Herstellung von Blends oder Legierungen, **dadurch gekennzeichnet, dass** als Blend oder Legierungs-Komponenten amorphe oder teilkristalline Polyamide eingesetzt und mit den üblichen Zuschlagsstoffen ausgerüstet werden.

19. Verwendung der erfindungsgemäßen Formmassen gemäß Anspruch 18, **dadurch gekennzeichnet, dass** als Zuschlagsstoffe Verstärkungsstoffe, Nanopartikel, Schlagzähmodifikatoren, Farben, Flammschutzmittel, Weichmacher, Stabilisatoren und/oder Gleitmittel verwendet werden.

## Claims

1. Transparent thermoplastic polyamide molding materials with a refractive index n_{D}²⁰ above 1.6,
**characterized in that** the copolyamides have the composition according to Formula (II):
MXDI/MXDT/6I/6T (II)
with the following proportions in mol% of the respective components:
50 to 80 mol% meta-xylylenediamine (MXD),
50 to 20 mol% hexamethylenediamine (6),
60 to 80 mol% isophthalic acid (1), and
40 to 20 mol% terephthalic acid (T) in relation to 100 mol% diamine
and 100 mol% dicarboxylic acids.

2. Polyamide molding materials according to claim 1, **characterized in that**, in order to accelerate the reaction, phosphorus-containing catalysts are added to the aqueous preparation during the polycondensation in amounts equaling 0.01 to 0.2 wt%.

3. Polyamide molding materials according to claim 2, **characterized in that** the phosphorus-containing catalysts are H₃PO₂, H₃PO₃ or H₃PO₄.

4. Polyamide molding materials according to any one of claims 1 to 3, **characterized in that** phosphorus-containing stabilizers of the type R₃PO₂, R₃PO₃, R₃PO₄ with R=H or metal ions or organic linear or cyclic residues or sterically hindered phenols are incorporated in amounts equaling 0.01 to 0.2 wt% for stabilizing the color in the course of polymerization and later processing.

5. Polyamide molding materials according to any one of claims 1 to 4, **characterized in that**, in order to control the chain length, either monofunctional amines or monofunctional acids are polymerized in, or an excess of diamine or dicarboxylic acid is incorporated.

6. Polyamide molding materials according to claim 5, **characterized in that** the monofunctional amines or monofunctional acids which are polymerized in, or the excess of diamine or dicarboxylic acid as controller types with stabilizer functions comprise multi substituted piperidyl groups or tertiary butyl phenyl groups.

7. Polyamide molding materials according to claim 6, **characterized in that** aliphatic or cycloaliphatic amines are used as monofunctional amines, and aliphatic, cycloaliphatic, or aromatic acids are used as monofunctional acids.

8. Polyamide molding materials according to claim 7, **characterized in that** hexylamine and/or cyclohexylamine are used as monofunctional amines.

9. Polyamide molding materials according to claim 7, **characterized in that** acids from the group of benzoic acid, acetic acid, and propionic acid are used as monofunctional acids.

10. Polyamide molding materials according to any one of the preceding claims 1 to 9, **characterized in that** the copolyamides have a relative viscosity (r.V.) of from 1.33 to 1.65, measured in 0.5 wt% m-cresol.

11. Method for producing molded bodies from the molding materials according to one or more of claims 1 to 10, **characterized in that** the known methods for thermoplastics are applied for forming the granulate that is produced from the molding materials into optical lenses or lens blanks.

12. Method for producing molded bodies from the molding materials according to claim 11, **characterized in that** the method of injection molding is applied.

13. Method for producing molded bodies from the molding materials according to claim 12, **characterized in that** the method of injection molding in multicavity tools is applied.

14. Method for processing the polyamide molding materials according to any one of claims 11 to 13, **characterized in that** films or other molded parts with polarization characteristics or with UV absorbers that filter out UV light under 400 nm, or with dyes for tinting the lenses, or with additives that alter their appearance based on temperature effects, or with thermochromatic additives that alter the tint depending on the temperature or depending on the wavelength of the incoming light are back-injected.

15. Method for processing the molded bodies that are produced from the molding materials according to any one of claims 11 to 14, comprising the varnishing of the surfaces with hardcoat, softcoat, or UV protection vamish, evaporation coating with carbon or metal atoms, plasma treatment, and layer polymerization.

16. Optical lenses for eyeglasses, **characterized in that** they are produced with the inventive molding materials according to any one of claims 1 to 10 and the method according to any one of claims 11 to 14.

17. Optical lenses for cameras, binoculars, microscopes, electro-optical measuring and testing devices, optical filters, headlight lenses, lamp lenses, projectors and video projectors, viewing windows, and gage glasses, **characterized in that** they are produced with the inventive molding materials according to any one of claims 1 to 10 and the method according to any one of claims 11 to 14.

18. Use of the inventive molding materials according to any one of claims 1 to 10 for producing blends or alloys, **characterized in that** amorphous or semi-crystalline polyamides are incorporated as blend or alloy components, these being furnished with the usual additives.

19. Use of the inventive molding materials according to claim 18, **characterized in that** as additives reinforcing agents, nanoparticles, impact strength modifiers, dyes, flame retardants, softeners, stabilizers, and/or lubricants are used.

## Revendications

1. Mélanges à mouler de polyamides thermoplastiques transparents, présentant un indice de réfraction n_{D}²⁰ supérieur à 1,6,
**caractérisés en ce que** les copolyamides présentent la composition selon la Formule (II) :
MXDI/MXDT/6I/6T (II)
avec les pourcentages en moles suivants des différents composants :
50 à 80 % en moles de méta-xylylènediamine (MXD),
50 à 20 % en moles d'hexaméthylènediamine (6),
60 à 80 % en moles d'acide isophtalique (I) et
40 à 20 % en moles d'acide téréphtalique (T),
pour 100 % en moles de diamine et 100 % en moles d'acides dicarboxyliques.

2. Mélanges à mouler de polyamides selon la revendication 1, **caractérisés en ce que**, pour accélérer la réaction pendant la polycondensation, on ajoute à la masse réactionnelle aqueuse des catalyseurs phosphorés en des quantités de 0,01 à 0,2 % en poids.

3. Mélange à mouler de polyamides selon la revendication 2, **caractérisé en ce que**, pour ce qui concerne les catalyseurs phosphorés, il s'agit du H₃PO₂, du H₃PO₃ ou du H₃PO₄.

4. Mélange à mouler de polyamides selon l'une des revendications 1 à 3, **caractérisé en ce que**, pour stabiliser la couleur au cours de la polymérisation et de la mise en œuvre ultérieure, on utilise des stabilisants phosphorés du type R₃PO₂, R₃PO₃, R₃PO₄, avec R = H, ou des ions métalliques ou des résidus organiques linéaires ou cycliques ou des phénols à empêchement stérique en des quantités de 0,01 à 0,2 % en poids.

5. Mélanges à mouler de polyamides selon l'une des revendications 1 à 4, **caractérisés en ce que**, pour ajuster la longueur de chaîne, on polymérise soit des amines monofonctionnelles, soit des acides monofonctionnels, ou on utilise un excès de diamine ou d'acide dicarboxylique.

6. Mélanges à mouler de polyamides selon la revendication 5, **caractérisés en ce que** les amines monofonctionnelles ou les acides monofonctionnels polymérisés, ou l'excès de diamine ou d'acide dicarboxylique, comprennent en tant que types de régulateurs des groupes pipéridyle ou des groupes tert-butyl-phényle polysubstitués, présentant des fonctions de stabilisant.

7. Mélanges à mouler de polyamides selon la revendication 6, **caractérisés en ce qu'**on utilise en tant qu'amines fonctionnelles des amines aliphatiques ou cycloaliphatiques et, en tant qu'acides monofonctionnels, des acides aliphatiques, cycloaliphatiques ou aromatiques.

8. Mélanges à mouler de polyamides selon la revendication 7, **caractérisés en ce qu'**on utilise en tant qu'amines monofonctionnelles l'hexylamine et/ou la cyclohexylamine.

9. Mélanges à mouler de polyamides selon la revendication 7, **caractérisés en ce qu'**on utilise en tant qu'acides monofonctionnels des acides du groupe consistant en l'acide benzoïque, l'acide acétique et l'acide propionique.

10. Mélanges à mouler de polyamides selon l'une des revendications précédentes 1 à 9, **caractérisés en ce que** les polyamides présentent une viscosité relative (r.V.) de 1,33 à 1,65, mesurée à 0,5 % en poids dans le m-crésol.

11. Procédé de fabrication d'objets moulés à partir des mélanges à mouler selon l'une ou plusieurs des revendications 1 à 10, **caractérisé en ce que**, pour transformer le granulé fabriqué à partir des mélanges à mouler en des lentilles optiques ou en des ébauches de lentilles, on utilise les procédés connus pour les thermoplastiques.

12. Procédé de fabrication d'objets moulés à partir des mélanges à mouler selon la revendication 11, **caractérisé en ce qu'**on utilise le procédé de moulage par injection.

13. Procédé de fabrication d'objets moulés à partir des mélanges à mouler selon la revendication 12, **caractérisé en ce que** le procédé de moulage par injection est mis en œuvre dans des moules à empreintes multiples.

14. Procédé de post-mise en œuvre des mélanges à mouler de polyamides selon l'une des revendications 11 à 13, **caractérisé en ce qu'**on procède à un surmoulage sur des feuilles ou d'autres pièces moulées présentant des propriétés de polarisation ou comportant des agents absorbant les UV, qui filtrent la lumière UV en-dessous de 400 nm, ou comportant des couleurs pour nuancer les lentilles, ou comportant des additifs qui sous l'action de la température modifient leur aspect, ou comprenant des additifs thermochromes, qui en fonction de la température ou en fonction de la longueur d'onde de la lumière irradiée modifient la couleur.

15. Procédé de post-mise en œuvre des objets moulés fabriqués à partir des mélanges à mouler selon l'une des revendications 11 à 14, **caractérisé en ce que** le laquage des surfaces avec un revêtement dur, un revêtement mou ou un vernis de protection contre les UV, comprend un dépôt en phase vapeur de carbone ou d'atomes métalliques, un traitement par plasma ou une application de couches par polymérisation.

16. Lentilles optiques pour lunettes, **caractérisées en ce qu'**elles ont été fabriquées à partir des mélanges à mouler selon l'invention selon l'une des revendications 1 à 10, et par le procédé selon l'une des revendications 11 à 14.

17. Lentilles optiques pour appareils photographiques, jumelles, microscopes, appareils électro-optiques de mesure et de contrôle, filtres optiques, lentilles de projecteurs, lentilles de lampes, projecteurs et projecteurs vidéo, regards et voyants, **caractérisées en ce qu'**elles ont été fabriquées à partir des mélanges à mouler selon l'invention selon l'une des revendications 1 à 10, et par le procédé selon l'une des revendications 11 à 14.

18. Utilisation des mélanges à mouler selon l'invention selon l'une des revendications 1 à 10 pour la fabrication de mélanges ou d'alliages, **caractérisée en ce qu'**on utilise en tant que mélange ou composants d'alliages des polyamides amorphes ou partiellement cristallins, et on leur ajoute des adjuvants usuels.

19. Utilisation des mélanges à mouler selon l'invention selon la revendication 18, **caractérisée en ce qu'**on utilise en tant qu'adjuvants des agents de renfort, des nanoparticules, des agents modifiant la résistance au choc, des couleurs, des agents d'ignifugation, des plastifiants, des stabilisants et/ou des lubrifiants.
